# EUROPEAN PATENT APPLICATION

(11) **EP 4 672 047 A1**
(43) Date of publication of application: **31.12.2025**
(21) Application number: 24185347.2
(22) Date of filing: 28.06.2024
(51) Int. Cl.: G06F 21/44, G06F 21/57, H04L 9/32, H04L 9/40

(54) **INDUSTRIAL COMPUTING DEVICE AND METHOD FOR PERFORMING ATTESTATION**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

An industrial computing device for controlling a technical system comprises: a measurement unit for installing therein measurement agents each configured to obtain a respective measurement result by performing a measurement of a device attribute of a component of the industrial computing device and/or the technical system; a measurement binding unit that receives the measurement result from each of the measurement agents and to generate a bound measurement result by binding the measurement result of each measurement agent to the respective measurement agent; and an attestation unit that provides a cryptographically secured attestation of the bound measurement result, The measurement binding unit and the attestation unit are part of a trusted computing base of the industrial computing device, whereas the measurement unit is formed outside of the trusted computing base.

Flexibility of an OEM to perform custom measurements is increased.

## Description

*Independent of the grammatical term usage, individuals with male, female or other gender identities are included within the term.*

The present invention relates to the field of industrial control, more particularly to the use of trusted computing in industrial control, and in particular to an industrial computing device and method for performing attestation.

So called remote attestation is a technical approach that allows a remote relying party to obtain a reliable confirmation of an attribute or property of a device. More specifically, an industrial system may comprise an industrial computing device and a technical system controlled by the industrial computing device. The device that is undergoing attestation may be the industrial computing device or may be the technical system controlled thereby. The relying party may be a user of an external device, such as an owner of the technical system, a vendor of the technical system, a warranty provider for the technical system, or the like. The relying party may have a legitimate interest in knowing whether the device, such as the industrial computing device or the technical system, may be trusted, whether the device has been tampered with or not, etc. To obtain such knowledge, the relying party relies on a reliable attestation of properties of the device. An action to be performed in the industrial system, such as maintenance, repairs, the decision to put the industrial system into production use and/or to continue using the industrial system in production, may be made dependent on a result of the remote attestation.

A general overview on use cases on technologies for attestation of computing device properties is provided by Internet RFC 9334 "Remote ATestation procedureS (RATS) Architecture".

In Google Playlntegrity attestation, https://developer.android.com/google/play/integrity/overview, a centrally provided Google Playlntegrity service can provide an app that is executing on a mobile device with an attestation that the app can use to demonstrate its authenticity (being an unmodified binary recognized by Google Playlntegrity services) to a third party. The attestation comprises the name of the application package, a nonce provided by the application when requesting the attestation, and a hash of an app certificate used by the app developer to sign the app when uploading the app to the Google app store.

The Trusted Platform module, TPM, specified by the Trusted Computing Group, TCG, supports attestation. A TPM is a secure hardware element (secure element) of a computing device that can securely store code and artifacts, such as passwords, certificates, and encryption keys, as well as results of measurements of properties of the computing device. The measurements may comprise cryptographic measurements of firmware, software, and configurations, key storage properties and the like. The measurements of device properties are performed in a Static Root of Trust Measurement, SRTM, process during secure boot of the computing device, or in a Dynamic Root of Trust Measurement, DRTM, process, which can be initiated with CPU-specific instructions while the computing device is already operating. In SRTM, the actual measurements are performed by code that is part of a trusted computing base, TCB, of the computing device, i.e., during secure boot. In DRTM, the measurements are performed by code that is executed in a clean state during runtime of the device. The measurement results obtained by SRTM or DRTM are stored in PCR registers of the TPM. The TPM can provide a cryptographically secured attestation of the measurement results stored in the PCR registers.

A computing device compliant with the ARM Platform Security Architecture (PSA) can provide attestation tokens that contain measurements of properties of the computing device, such as its software, hardware and firmware. The measurements are taken by code that is executing in a Secure Executing Environment, SEE, which constitutes a trusted computing base.

It is one object of the present invention to improve the remote attestation of device and system properties in an industrial system.

Accordingly, an industrial computing device for controlling a technical system of a first aspect comprises: a measurement unit for installing therein a number of measurement agents, each measurement agent configured to obtain a respective measurement result by performing a measurement of a device attribute of a component of the industrial computing device and/or the technical system controlled thereby; a measurement binding unit configured to receive the measurement result from each of the number of measurement agents and to generate a bound measurement result by binding the measurement result of each measurement agent to the respective measurement agent; and an attestation unit configured to provide a cryptographically secured attestation of the bound measurement result. Herein, the measurement binding unit and the attestation unit are part of a trusted computing base of the industrial computing device, whereas the measurement unit is formed outside of the trusted computing base of the industrial computing device.

The proposed computing device advantageously increases the flexibility in performing specific attestations in an industrial scenario.

More specifically, the industrial computing device comprises a Trusted Computing Base, TCB, and the binding unit and the attestation unit are part of the trusted computing base. Thus, cryptographically secured attestations that are created by the attestation unit can be trusted if there is trust in the manufacturer of the industrial computing device.

However, a third party, such as a manufacturer, owner or operator of the technical system that is controlled by the industrial computing device (referred to as "OEM", original equipment manufacturer, hereinbelow), can flexibly design and create any number of custom measurement agents that may measure specific aspects of custom control software that the OEM installs on the industrial computing device and/or that measure specific aspects of the technical system itself. Moreover, advantageously, the OEM can install the number of custom measurement agents in the measurement unit without having to obtain permission and access to perform modifications of the trusted computing base.

Nevertheless, thanks to the binding unit that binds the respective measurement result to (an identity, a cryptography hash value, a digital signature or the like of) the respective measurement agent, trust into the measurements attested by the attestation can be built by a) checking whether the attestation itself can be trusted and b) by checking whether the measurement agents (their identities, cryptographic hash values, digital signatures or the like) to which these measurement results are bound are known and/or trusted.

It is noted that independent of the grammatical term usage, for terms such as "operator", "owner", "manufacturer", "customer" and the like, individuals with male, female or other gender identities are included within the term.

The term "a number of", herein, is used in the sense of a number N of one or more, i.e., N ≥ 1.

The term "installing" may comprise installing in the field, i.e. after the industrial computing device has been shipped to a customer, but may also comprise "pre-installing" while manufacturing the industrial computing device, or to a combination of both.

The technical system may be a single piece of equipment such as a valve, an actuator, a sensor, a robot or the like, or may comprise multiple pieces of equipment. The technical system may also be a machine, a plurality of machines, a production line, a manufacturing plant, or the like.

The respective unit or entity, e.g., the measurement unit, the measurement binding unit, and the attestation unit, and the respective measurement agent, may each be implemented in hardware and/or in software. If said unit or entity is implemented in hardware, it may be embodied as a device, e.g., as a computer or as a processor or as an integrated circuit, or as a part of a system, e.g., a computer system. If said entity is implemented in software it may be embodied as a computer program product, as a function, as a routine, as a program code or as an executable object.

The industrial computing device may be suitable for controlling the technical system. In particular, the industrial computing device may comprise at least one wired or wireless communication port to which the technical system can be connected so as to exchange control signals and feedback signals between the technical system and the industrial computing device. In particular, the industrial computing device may comprise control logic (control applications or hard-wired logic) for controlling the technical system by communicating with the technical system using the at least one wired or wireless communication port.

Performing a measurement may comprise causing a physical measurement within the technical system by exchanging control signals with the technical system. Performing a measurement may also comprise causing a physical measurement, such as reading out memory values, reading out permanent storage, operating physical unclonable functions, and the like, within the industrial computing device itself.

The term "device attribute" may refer to any attribute that is descriptive of any property of the measured device (industrial computing device and/or technical system) that can be measured.

Binding a measurement result to a measurement agent from which it was received may comprise creating a data structure that comprises at least the measurement result and further information, the further information allowing a relying party to verify whether the measurement result was measured by a measurement agent that enjoys the trust of the relying party.

A relying party, herein, is defined as any local or remote party that is provided with a cryptographically secured attestation that was obtained from the attestation unit.

It is noted that the binding may merely create an association between the measurement result and the further information; such a bound measurement result per se would not be tamper-proof unless it is cryptographically sealed. However, even if the binding unit does not cryptographically seal the bound measurement result, then the binding will then be sealed (protected against tampering going unnoticed) by the attestation unit when cryptographically securing the attestation of the bound measurement result.

It is noted that the term "bound measurement result" (in singular) may refer collectively to a plurality of bindings between respective measurement results and the respective measurement agents (agent identities, etc.)

A cryptographically secured attestation may be any data structure that allows to derive trust in what is attested, i.e. in the bound measurement result, from a source of trust, such as the manufacturer of the industrial computing device. The attestation being cryptographically secured thus fulfils two functions: a) The attestation is protected against tampering with what is attested, i.e. with the bound measurement result, i.e., at least any such tampering cannot go unnoticed; and b) the attestation gives cryptographic evidence of the identity of the attestation unit and its trust relationship with the source of trust. Merely as one example, the cryptographically secured attestation may comprise a cryptographic signature of the bound measurement result that has been made with a private key that was issued by a certification authority of the manufacturer of the industrial computing device. A relying party that is in a trust relationship with the certification authority of the manufacturer of the computing device can thus confirm, using a corresponding public key obtained from a certificate supplied by the attestation unit or the like, that the digital signature can be trusted and consequently, that the bound measurement result is trustworthy.

It is noted that it is possible to provide the cryptographically secured attestation separately from the bound measurement result, as long as cryptographic means are used to associate the attestation with the bound measurement result. Alternatively, the cryptographically secured (signed, hashed, etc.) attestation may comprise the bound measurement result.

A trusted computing base comprises computational functionality implemented in software and/or hardware that is critical to the security and trustworthiness of the industrial computing device. The trusted computing base may be composed of computational functionality that has been scrutinized by human code review and found to be error-free for practical purposes. The trusted computing base may comprise hardware means configured to ensure its integrity. Such hardware means may include read-only memory, physically unclonable functions, secure elements, such as a Trusted Platform Module, TPM, and the like. More particularly, cryptographic keys and cryptographic certificates used by the computational functionality of the trusted computing base, such as by the attestation unit, may be securely stored in a secure element, and cryptographic operations, such as cryptographic signing, decryption, encryption and/or hashing, may be performed by the secure element. Using such means, it may be ensured that units that are not part of the trusted computing base are unable to compromise the security and trustworthiness of the industrial computing device.

According to an embodiment, the industrial computing device further comprises the number of measurement agents installed in the measurement unit.

The number of measurement agents may have been installed in the measurement unit by an OEM in the field, or may have been pre-installed in the measurement unit during manufacturing of the industrial computing device.

According to a further embodiment, the measurement binding unit is configured to obtain identifying information of each measurement agent and to bind the respective measurement result to the respective measurement agent by associating the measurement result with the obtained identifying information of the measurement agent.

Thus, a relying party that has trust in the cryptographically secured attestation can use the identifying information bound to the attested bound measurement result to verify whether it also can trust the bound measurement result. For example, the measurement result may be trusted if the identifying information comprised in the bound measurement result identify a known and trusted measurement agent.

That is, "obtaining identifying information of a measurement agent" may comprise "measuring the measurement agent". Thus, an advantageous additional level of indirection is introduced: The measurement agents operating outside the trusted computing base measure the specific device attributes of interest, and the measurement binding unit operating inside the trusted computing base in turn measures the measurement agent. In this way, the bound measurement result of the device properties may be as trustworthy as a measurement result of a measurement agent operating inside the trusted computing base. Herein, the additional level of indirection advantageously provides the flexibility for the OEM to create custom measurement agents measuring specific device attributes of OEM-specific software to be installed on the industrial control device and/or of the technical system without having to modify the trusted computing base, while at the same time enjoying the same level of trust that is offered by hypothetical measurement agents that operate inside the trusted computing base.

Identifying information may include, for example, a URI, a URL, a textual identification code, a serial number, a version number, a user ID of the user under which the measurement agent is executed, a file name, a file path or a combination thereof.

According to a further embodiment, the identifying information of the respective measurement agent comprises one or more of a cryptographic hash value of code of the measurement agent, a digital signature of code of the measurement agent, a cryptographic hash value of data of the measurement agent, a digital signature of data of the measurement agent, a cryptographic digital signature of the measurement result made by the measurement agent, a public key corresponding to a cryptographic digital signature of the measurement result made by the measurement agent, and a digital certificate corresponding to a cryptographic digital signature of the measurement result made by the measurement agent.

More particularly, in embodiments in which the measurement agent is implemented in software, the respective cryptographic hash value may be obtained by measuring, i.e. reading out, the code and/or data that forms the measurement agent when the code is executed. The cryptographic hash value makes it easy for a relying party to determine whether the measurement agent is the expected measurement agent or whether it has been tampered with.

Alternatively, the act of measuring may comprise obtaining the cryptographic digital signature of the code and/or data of the measurement agent. In this variant, the cryptographic digital signature may prove the identity of the measurement agent, e.g. if it has been created with a private key issued by a certification authority of the OEM that is trusted by the relying party.

Alternatively, the act of measuring may comprise obtaining the cryptographic digital signature of the measurement results from the measurement agent. In this variant, the cryptographic digital signature may prove the identity of the measurement agent, e.g. if it has been made with a private key issued by a certification authority of the OEM that is trusted by the relying party.

As such, advantageously, a cryptographically secured identity of the measurement agent is bound to the measurement result.

According to a further embodiment, the cryptographically secured attestation comprises or cryptographically links to the bound measurement result.

If the cryptographically secured attestation comprises the bound measurement result, advantageously, only a single data structure (the cryptographically secured attestation) comprises all information that is necessary to derive trust in the measurement results throughout all levels of indirection. Handling of the attestation and the bound measurement result is thus advantageously simplified.

It the cryptographically secured attestation cryptographically links to the bound measurement result, the bound measurement result can be transmitted separately. The cryptographic link may be, for example, a cryptographic hash value of the bound measurement result. The cryptographic link may also comprise a URI indicating from where to fetch the bound measurement result, for example.

According to a further embodiment, the trusted computing base of the industrial computing further comprises a policy validation unit configured to perform a validation of the bound measurement result based on a validation policy and to bind a validation result, and preferably the validation policy, to the bound measurement result.

The validation policy may be a predefined rules-based validation policy. Alternatively, the policy validation unit may comprise an interface that allows the OEM to install a custom rules-based validation policy into the trusted code base. In either case, the validation policy may not only be a rules-based validation policy, but may also comprise a state machine that relates current measurement results to previous measurement results and validates the relationships between current and previous measurement results.

Thus, the attestation unit may advantageously not only attest the measurement results as such, but may also, or alternatively, attest a result of the policy-based validation of the measurement results. Thus, advantageously, the burden of verifying the attestation and the attest measurement results of the relying party is reduced, and more complex validations can be implemented.

It is noted that a "validation result bound to the bound measurement result" also comprises a case in which the validation policy is only bound to the bound measurement result if the validation succeeds. In this case, the presence of the validation policy bound to the bound measurement results comprises an implicit indication of a positive validation result.

It is noted that a bound measurement result that comprises a validation result does not necessarily need to comprise the original measurement results. That is, the policy validation unit may release the binding to the individual measurement results, discard the individual measurement results, or preprocess or alter the individual results, such that the bound measurement result, after processing by the policy validation unit, may only comprise part of or may comprise none of the measurement results obtained by the measurement binding unit, but may only comprise the validation result, for example.

Furthermore, if the validation policy is bound to the bound measurement result, the relying party can advantageously confirm which validation policy was used to perform the validation.

According to a further embodiment, the cryptographically secured attestation further comprises a freshness value.

The freshness value may be a time stamp, counter value, an epoch value or a nonce value, for example.

Thus, advantageously, an attestation may only be trusted when the attestation is sufficiently fresh, thereby increasing security and trust in an industrial system.

According to a further embodiment, at least a portion of the trusted computing base is embodied on a dedicated hardware-based or hardware-bound secure element of the industrial computing device.

In particular, cryptographic keys and/or cryptographic certificates that are used by the attestation unit to provide the cryptographically secured attestation may be stored in the secure element. Furthermore, cryptographic operations, such as creating a cryptographic signature for cryptographically securing the attestation, may be performed by the secure element.

Thus, advantageously, the cryptographically secured attestations may be protected against forgery resulting from key theft or the like.

According to a further embodiment, the attestation unit is configured to transmit the cryptographically secured attestation to an external device.

The external device may be owned by the OEM or by another relying party. The external device receives the cryptographically secured attestation, and may confirm whether it can trust the attestation by verifying the identity of the attestation unit, e.g., by verifying validity of a cryptographic signature made by the attestation unit, and verifying the identity of the measurement agents, e.g., by comparing the identity information of the measurement agents comprised in the bound measurement result against predefined identity information.

Thus, the external device can advantageously decide whether it is desirable and/or safe to conduct further operations with the industrial computing device and/or the technical system controlled thereby, based on the cryptographically secured attestation of the bound measurement result.

According to a further embodiment, the industrial computing device is an app-enabled industrial edge device comprising an application runtime environment, each measurement agent is comprised in a respective application executing in the application runtime environment, and the attestation unit is configured to, on request by an application executing in the application runtime environment, provide the cryptographically secured attestation to the application executing in the application runtime environment.

Thus, advantageously, custom control applications for the technical system, which may be created by the OEM and installed in the application runtime environment, can use the attestation obtained from the attestation unit, to self-certify their authenticity, authenticity of the industrial computing device, and authenticity of the technical system, with any communication partner (relying party) who wishes to access the respective custom control application.

Any embodiment of the first aspect may be combined with any embodiment of the first aspect to obtain another embodiment of the first aspect.

According to a second aspect, an industrial computing system comprises: the industrial computing device of the first aspect or any of its embodiments; a verifier component configured to obtain the cryptographically secured attestation from the industrial computing device; to verify the cryptographically secured attestation; and to provide a verification result; and an operating or maintenance application configured to operate or perform maintenance on the technical system controlled by the industrial computing device by communicating with the industrial computing device. Herein, the operating or maintenance application is configured to operate or perform maintenance on the technical system in a regular manner only if the verification result indicates a successful verification.

Herein, the operating or maintenance application may be an application developed by the OEM that gives customers of the OEM access to the technical system, or the like. Thanks to the proposed solution, the operating or maintenance application may advantageously confirm the authenticity not only of the industrial computing device, but also of the custom measurement agents, of any custom OEM-specific software executing on the industrial computing device, and any OEM-specific components of the OEM-provided technical system, before proceeding to allow operation and/or maintenance and/or servicing thereof.

The verifier component may be provided centrally, such that a plurality of instances of the operating or maintenance applications may all rely on the central verifier component for performing the verification of the cryptographically secure attestation, thereby reducing the load caused by instances of the operating or maintenance application.

As discussed hereinabove, verifying the cryptographically secured attestation may comprise verifying and identity of the attestation unit, verifying identities of the measurement agents, and verifying a result of a policy-based validation of the measurement results obtained from these measurement agents.

According to a further embodiment, the verifier component comprises a policy validation unit configured to perform a validation of the bound measurement result comprised in or cryptographically linked to by the cryptographically secured attestation based on a validation policy. Herein, the verifier component is configured to provide the verification result based on a result of the policy-based validation performed by the policy validation unit.

The features, configurations and advantages described for the validation unit for the embodiment in which the validation unit is comprised in the trusted computing base also apply to the present embodiment in which the validation unit is provided externally.

According to a further embodiment, the verifier component, the operating or maintenance application and, optionally, the policy validation unit, are comprised in one or more computing devices that are physically separate from the industrial computing device.

The one or more computing devices may comprise personal computers, workstations, server computers, smart devices such as smartphones, tablet computers or the like. The one or more computing devices may comprise one or more client devices to be used by an operator, and may comprise one or more server devices, such as a cloud computing platform, and the like. The one or more computing devices may be owned and/or operated by the OEM and/or by customers of the OEM or any other relying party.

At least some of the separate computing devices may be a) in a trust relationship with a certification authority operated by a manufacturer so that they can confirm the authenticity of the attestation unit that provided the cryptographically secured attestation. At least some of the separate computing devices may be b) in a trust relationship with a certification authority operated by the OEM, so that they confirm the authenticity of the measurement agents (identity information thereof) bound to the bound measurement result that is attested by the cryptographically secured attestation.

Any embodiment of the first or second aspect may be combined with any embodiment of the second aspect to obtain another embodiment of the second aspect.

Under a third aspect, there is provided a method for performing attestation, the method performed by an industrial computing device for controlling a technical system, the method comprising: each of a number of measurement agents obtaining a measurement result by performing a measurement of a device attribute of a component of the computing device and/or the technical system controlled thereby; generating a bound measurement result by binding the measurement result from each measurement agent to the respective measurement agent; and providing a cryptographically secured attestation of the bound measurement result, wherein the step of generating the bound measurement result and the step of providing the cryptographically secured attestation are performed in a trusted computing base of the industrial computing device, whereas the step of obtaining the respective measurement result is executed outside of the trusted computing base of the industrial computing device.

Under a fourth aspect, the invention relates to a computer program product comprising a program code for executing the above-described method when run on at least one computer.

The at least one computer comprises at least the industrial computing device, and may further comprise the computing devices that are physically separate from the industrial computing device.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network. A computer program product may also be provided as BIOS code or firmware code stored on a ROM, EPROM or EEPROM device, and the like.

The embodiments, features and advantages described with reference to the apparatus of the first aspect or the system of the second aspect apply mutatis mutandis to the method of the third aspect and to the computer program product of the fourth aspect.

Further possible implementations or alternative solutions of the invention also encompass combinations - that are not explicitly mentioned herein - of features described above or be-low with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an industrial computing device 10 of a first exemplary embodiment;
Fig. 2 visualizes method steps of a method for performing attestation according to exemplary embodiments;
Fig. 3 shows an industrial system 200 according to a second exemplary embodiment;
Fig. 4 shows an industrial system 200' according to a third exemplary embodiment;
Fig. 5 shows an industrial system 200" according to a fourth exemplary embodiment; and
Fig. 6 shows an industrial system 200‴ according to a fifth exemplary embodiment.

In the Figures, like reference numerals designate like or functionally equivalent elements, unless otherwise indicated.

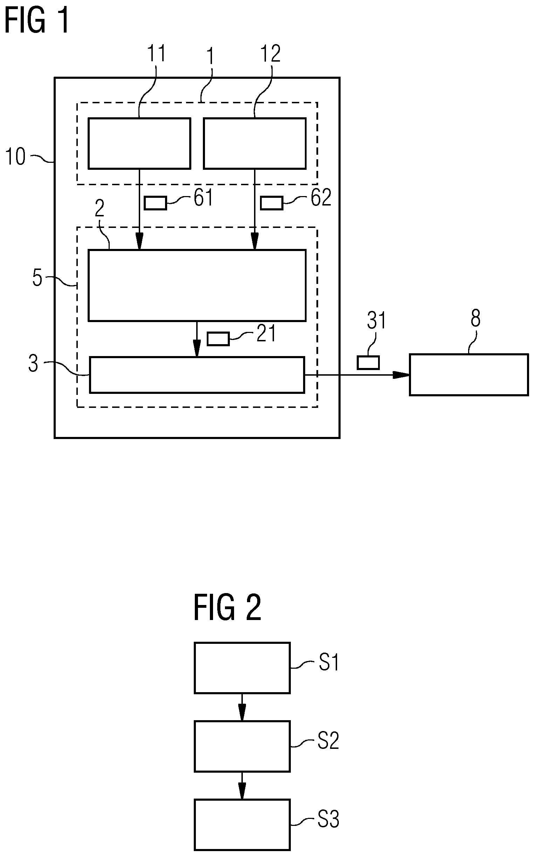

Fig. 1 is a functional illustration of an industrial computing device 10 of a first exemplary embodiment. Fig. 2 visualizes method steps of a method for performing attestation according to exemplary embodiments. Reference will be made to Fig. 1 and Fig. 2.

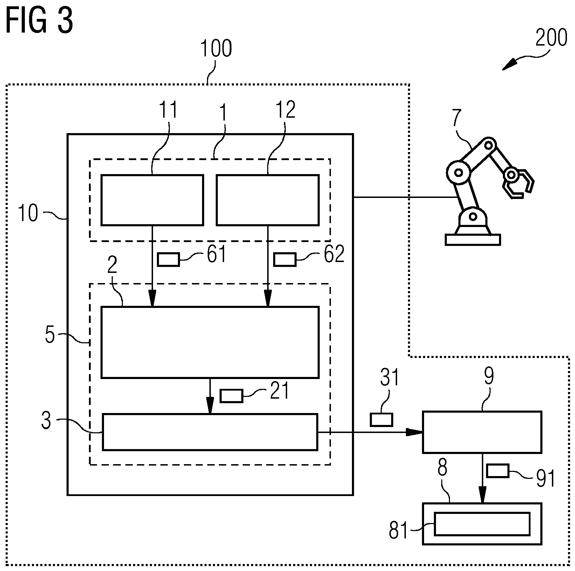

The industrial computing device 10 is configured to control a technical system (7 in Figs. 3 to 6) and comprises (non-shown) control functionality, which may be implemented in hardware or software. Furthermore, the industrial computing device 10 comprises a measurement unit 1 which is configured to allow one or more measurement agents 11, 12 to be installed therein. When installed in the measurement unit 1, in step S1 of the proposed method, each measurement agent 11, 12 performs a measurement of a device attribute indicative of a property of the industrial computing device 10 and/or the technical system (7 in Figs. 3 to 6) controlled thereby, so as to obtain a respective measurement result 61, 62.

Furthermore, the industrial computing device 10 comprises a trusted computing base 5. The trusted computing base 5 comprises carefully reviewed code that is critical for the integrity of operations of the industrial computing device 10. The trusted computing base 5 may be implemented using and/or may comprise a secure element, such as a TPM, and the like, which helps safeguarding the integrity of code and data of the trusted computing base 5. The trusted computing base 5 comprises a measurement binding unit 2 and an attestation unit 3.

In step S2 of the proposed method, the measurement binding unit 2 obtains the measurement results 61, 62 from the measurement agents 11, 12 and binds each measurement result 61, 62 to the corresponding measurement agent 11, 12. The measurement binding unit 2 thus provides a bound measurement result 21, which comprises the measurement results 61, 62 bound to the respective measurement agents 11, 12, to the attestation unit 3.

In step S3, the attestation unit 3 provides a cryptographically secured attestation 31 of the bound measurement result 21. Furthermore, the attestation unit 3 provides the cryptographically secured attestation 31 to an external device 8.

Herein, the step S2 of generating the bound measurement result 21 and the step S3 of providing the cryptographically secured attestation 31 are performed by functionality implemented inside the trusted computing base 5 of the industrial computing device 10 (i.e., by the measurement binding unit 2 and the attestation unit 3), whereas the step of obtaining the respective measurement result 61, 62 is executed outside of the trusted computing base 5 of the industrial computing device 10 (i.e. by the measurement agents 11, 12 installed in the measurement unit 1).

Thus, an OEM who designs a technical system (7 in Figs. 3-7) and control functionality therefore is advantageously free to implement and install custom measurement agents 11, 12 without having to tamper with the trusted computing base 5 while still benefitting from the chain of trust leading to the manufacturer of the industrial computing device 10.

That is, an OEM-provided external device 8 that receives the cryptographically secured attestation 31 can perform three steps of checking the cryptographically secured attestation 31:
In a first checking step, the external device 8 can use cryptography to check the integrity and authenticity of the cryptographically secured attestation 31. For example, if the cryptographically secured attestation 31 is secured by a digital signature, the external device can check whether a cryptographic key with which the digital signature is made is certified by a certification authority with which the external device 8 is in a trust relationship. In this way, an identity of industrial computing device 10 and/or of the attestation unit 3 that provided the cryptographically secured attestation 31 is confirmed.

In a second checking step, the external device 8 can obtain the bound measurement result 21 and can compare information on the measurement agents 11 ,12 to which the measurement results 61, 62 comprised in or indicated by the cryptographically secured attestation 31 are bound with expected information to determine whether the measurement results 61, 62 were obtained from the expected measurement agents 11, 12.

It is noted that the external device 8 can obtain the bound measurement result 21 by reading the bound measurement result 21 from the cryptographically secured attestation 31 if the bound measurement result 21 is comprised in the cryptographically secured attestation 31. If the cryptographically secured attestation 31 cryptographically links to the bound measurement result 21, the external device 8 can obtain the bound measurement result 21, for example, by fetching the bound measurement result 21 from an URI comprised in the cryptographically secured attestation 31 and confirming that a cryptographic hash value comprised in the cryptographically secured attestation 31 matches a cryptographic hash value that the policy validation unit 4' calculates for the fetched bound measurement result 21.

As a third checking step, the external device 8 can check whether the measurement results 61, 62 that are comprised in the bound measurement result 21 match expected reference values.

If all three checks are passed, integrity of the industrial computing device 10, of control functionality implemented therein, and/or of a technical system 7 (Figs. 2-7) connected thereto, may be assumed, and the external device 8 may proceed to perform an action, such as processing a request or accepting data provided by the industrial computing device 10, commissioning repairs, confirming warranty status, and the like.

According to a preferred further development, the attestation unit 3 may use functionality of a secure element that is part of the trusted code base 5, for example, to create the cryptographically secured attestation 31. The secure element may be used to securely store cryptographic keys and/or to securely perform cryptographic operations.

According to another preferred further development, the attestation unit 3 may be implemented using a Trusted Platform Module, TPM, having one or more Platform Configuration Registers, PC. Herein, when a measurement is made, the measurement binding unit 2 may provide the TPM with the bound measurement result 21 being a number of tuples each comprising the actual measurement result 61, 62 and information on the measurement agent 11, 12 that determined the respective measurement result 61, 62, and store each such tuple in a respective PCR register for attestation by the attestation unit 3.

The secure element, the TPM, and the like are examples for hardware-based or hardware-bound secure elements of the industrial computing device 10.

According to a further development, in step S2, the measurement binding unit 2 performs a measurement of the respective measurement agent 11, 12. That, is, the measurement binding unit 2 obtains identifying information of each measurement agent 11, 12, and binds the respective measurement result 61, 62 to the respective measurement agent 11, 12 by associating (such as by creating a tuple or other kind of associating data structure) the measurement result 61, 62 with the obtained identifying information of the measurement agent 11, 12.

Examples of identifying information obtained by the measurement binding unit 2 when measuring the respective measurement agent 11, 12 include a cryptographic hash value of code and/or data, such as configuration data, of the measurement agent 11, 12, a digital signature of code and/or data, such as configuration data, of the measurement agent 11, 12, a URI, a URL, a textual identification code, a serial number, a version number, a user ID of the user under which the agent is executed, a file name, a file path of the measurement agent 11, 12, or any other identifying information, or a combination thereof.

According to another preferred further development, the measurement binding unit 2 does not perform an active measurement. Rather, each respective measurement agent 11, 12 digitally signs its measurement result 61, 62, so that the digitally signed measurement result 61, 62 obtained by the measurement binding unit 2 already comprises (is pre-bound to) identifying information (i.e. a cryptographic digital signature) identifying the respective measurement agent 11, 12. In this case, the measurement binding unit 2 merely combines the digitally signed measurement results 61, 62 into a single bound measurement result 21. Optionally, the measurement binding unit 2 may verify the digital signatures made by the measurement agent, 11, 12, or such verification may be deferred to the relying party, such as to the external device 8.

According to preferred further developments of the first exemplary embodiment, the respective measurement agent 11, 12 may be implemented as a separate component; or may be, preferably, implemented as part of an app that can be downloaded to the industrial computing device 10 from an app store or that can be installed on the industrial computing device 10 by a user or by a device management system; or may be implemented as part of the industrial computing device's 10 firmware or operating system or other base software, such as, for example, as a Linux kernel module, or as a systemd service.

According to one preferred further development, the cryptographically secured attestation 31 comprises a cryptographic link to the bound measurement result 21 that it attests. For example, the cryptographic link may comprise a cryptographic hash value of the attest bound measurement result 21.

According to another preferred further development, the cryptographically secured attestation 31 comprises the bound measurement result 21, which advantageously simplifies the logic for checking the cryptographically secured attestation 31 and the bound measurement result 21 on the end of the external device 8.

According to preferred further developments of the first exemplary embodiment, the cryptographically secured attestation 31, in addition to its basic function of attesting the truthfulness of the contents of the bound measurement result 21, may also comprise further information that allows to determine trustworthiness of the cryptographically secured attestation 31 and/or the bound measurement result 21, such as information indicating the specific measurement binding unit 2, information indicating the specific attestation unit 3, information indicating the specific trusted computing base 5 as a whole, which were employed to create the cryptographically secured attestation 31.

According to a particularly preferred further development, the cryptographically secured attestation 31 comprises a freshness value. The freshness value is a value that can be used to determine a window of validness of the cryptographically secured attestation 31 and have the cryptographically secured attestation 31 expire (become invalid) when said window of validness has expired. Suitable examples of a freshness value include a time stamp, a counter value, an epoch value, or a nonce value. Thus, advantageously, the cryptographically secured attestation 31 can expire when it is not fresh any more, avoiding the risk of old attestations attesting past truths that are no longer true and the like.

Fig. 3 shows an industrial system 200 according to a second exemplary embodiment. The second exemplary embodiment is based on the first exemplary embodiment or any of its preferred further developments.

The industrial system 200 comprises an industrial computing system 100 and a technical system 7 which is controlled by the industrial computing device 10 of the first exemplary embodiment. The industrial computing system 100 comprises the industrial computing device 10 of the first exemplary embodiment and further comprises the external device 8 and a verifier component 9. The verifier component 9 is configured to obtain the cryptographically secured attestation 31 from the industrial computing device 10; to verify the cryptographically secured attestation 31; and to provide a verification result 91.

Herein, verifying the cryptographically secured attestation 31 may comprise any one or more of the three checking steps that were described for the external device 8 in the discussion of the advantages of the first exemplary embodiment hereinabove.

The verification result 91 may comprise a fail/pass information, and/or may comprise any other more or less fine-grained information about whether or to what degree the cryptographically secured attestation 31 and the bound measurement result 21 comprised therein or to linked thereby have passed all the above-mentioned verifications.

In the second exemplary embodiment, the verification result 91 is provided to an operating or maintenance application 81 executing on the external device 8. The operating or maintenance application 81 may be an application that is used to operate the technical system 7 remotely from the external device 8, to perform maintenance of the technical system 7 and/or of the industrial computing device 10, to check the warranty status of the technical system 7 and/or the industrial computing device 10, to commission repairs thereon or the like. Herein, the operating or maintenance application 81 performs its functionality in a regular manner only if the verification result 91 indicates a successful verification.

Thus, advantageously, if the technical system 7 and/or the industrial computing device 10 have been tampered with in an illegit manner, either no attestation 31 will be issued or the verification will fail, and an intended action of the operating or maintenance application 81 with such an illegally modified technical system 7 and/or industrial computing device 10 can be advantageously prevented.

According to the second exemplary embodiment that is shown in Fig. 3, the verifier component 9 is provided separately from the external device 8. For example, the verifier component 9 may be provided as part of a central server computer device or as part of a cloud service. Thus, if a plurality of external devices 8, such as for example a plurality of smartphones carried by various operators etc., are present, advantageously, the functionality for processing and verifying the cryptographically secured attestation 31 with assorted key and certificate management needs only be implemented once centrally and does not need to be duplicated onto each of the external device 8.

It is noted that in the second exemplary embodiment, the verifier component 9, the external device 8 and the operating or maintenance application 81 comprised therein are comprised in one or more computing device that are physically separate from the industrial computing device 10.

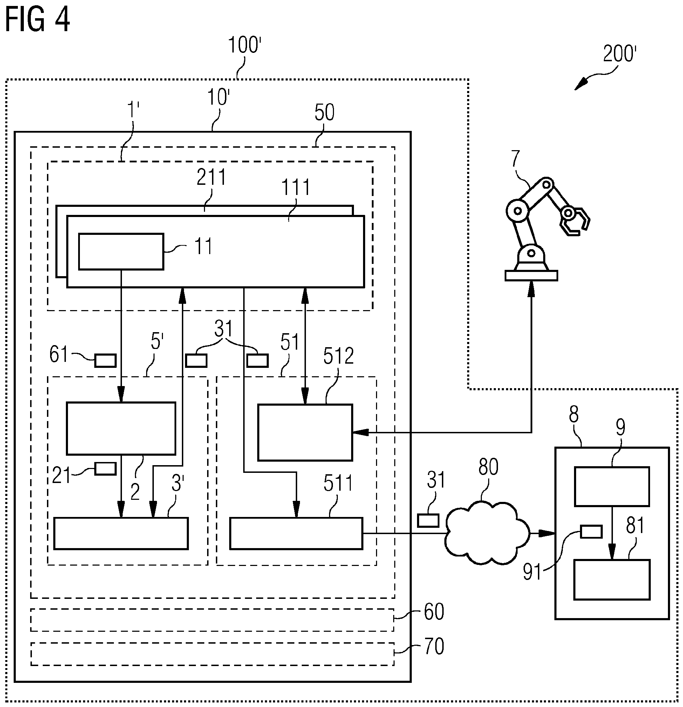

Fig. 4 shows an industrial system 200' according to a third exemplary embodiment. The third exemplary embodiment is a variant of the second exemplary embodiment, and the description focusses on differences and additional features.

The industrial system 200" comprises an industrial computing system 100' and the technical system 7. The industrial computing system 100' comprises industrial computing device 10', a communication network 80, and the external device 8.

The industrial computing device 10' according to the third exemplary embodiment is an app-enabled industrial edge device. The app-enabled industrial computing device 10' comprises a hardware layer 70, an operating system layer 60 and an application runtime environment 50. A plurality of industrial control applications 111, 211 are installed inside the application runtime environment 50.

The application runtime environment 50 also provides generic application programming interfaces, APIs, 51, such as a machine communication API 512 and a network communication API 511. The machine communication API 512 enables the industrial control applications 111, 211 to exchange control signals (commands, responses, readings and the like) with the technical system 7. That is, thanks to the industrial control applications 111, 211 interacting with the technical system 7 using the machine communication API 512, the industrial computing device 10' is configured to control the technical system 7. The network communication API 511 enables the industrial control applications 111, 211 to communicate, over a communication network 80, with the outside world, and, in particular, with the operating or maintenance application 81 executing on the external device 8 of a relying party. The operating or maintenance application 81 interacts with the industrial control applications 111, 211 so as to control the technical system 117, perform maintenance, commission servicing, or the like, as has been described for the second exemplary embodiment. Herein, it is desired that the industrial control applications 111, 211 can prove to the operating or maintenance application 81 that they are legit, i.e. that the industrial control applications 111, 211 themselves are authentic, and that the industrial computing device 10 as well as the technical system 7 are authentic (have not been tampered with).

Therefore, similar to the first and second exemplary embodiments, the industrial computing device 10' of the third exemplary embodiment comprises a measurement unit 1', a measurement binding unit 2 and an attestation unit 3'. Of these, similar to the first and second exemplary embodiment, the measurement binding unit 2 and the attestation unit 3' are part of a trusted code base 5' being part of the application runtime environment 50, while the measurement unit 1' is formed outside of the trusted computing base 5'.

The measurement unit 1' is formed by the industrial control applications 111, 211 themselves. More particularly, each of the industrial control applications 111, 211 comprises a respective measurement agent 11 as a component thereof. The respective measurement agent 11 may be configured to measure to measure, as a device attribute, any information that is deemed to be relevant by a developer of the corresponding industrial control application 111, 211. Such information may include information relating to a configuration of the technical system 7 (such as of a production machine or the like), information relating to hardware components of the technical system 7, diagnosis data of the technical system 7, maintenance data of the technical system 7, or the like. It is also conceivable that the respective measurement 11 measures the remaining parts of the industrial control application 111, 211 of which it is a part.

In the same way as the measurement binding unit 2 of the first or second exemplary embodiment, the measurement binding unit 2 of the third exemplary embodiment receives a number of measurement results 61, binds each measurement result 61 to the corresponding measurement agent 11, and binds everything together to obtain a bound measurement result 21. Herein, for example, a cryptographic identity of the industrial control application 111, 211 and/or of its measurement agent 11 may be used as identifying information of the measurement agent 11, for example. To this end, the measurement binding unit 2 may determine information such as a cryptographic hash value of the corresponding industrial control application 111, 211 or a component thereof (such as a class or a binary) of the included measurement agent 11; a download server of the industrial control application 111, 211, from which the industrial control application 111, 211 was loaded and installed, or information about an edge manager that installed the industrial control application 111, 211 on the industrial computing device 10'. The resulting bound measurement result 21 may thus be a number of tuples <m, malD>, with m being the respective measurement result 61, and malD being the above-described identifying information of the measurement agent 11. That is, a tuple <m, malD> associates a measurement result 61 <m> with the obtained identifying information <malD> of the measurement agent (11, 12).

The attestation unit 3' of the third exemplary embodiment works similarly to the attestation unit 3 of the first and second exemplary embodiment. For example, the attestation unit 3' may create a digital signature of the number of tuples <m, malD>. The attestation unit 3' may create the digital signature using an attestation key of the industrial computing device 10'. As in preferred developments of the first and second exemplary embodiments, also according to the third exemplary embodiment, the cryptographically secured attestation 31 may comprise, in addition to the digital signature, a freshness value. Furthermore, the cryptographically secured attestation 31 may also comprise information such a platform information about the application runtime environment 50 and/or the operating system layer 60.

However, the attestation unit 3' of the third exemplary embodiment differs from the attestation unit 3 of the first or second exemplary embodiment in that the attestation unit 3' does not provide the cryptographically secured attestation 31 directly to an external device 8. Rather, according to the third exemplary embodiment, tuples <m, malD> are queued in a measurement history that is kept within the trusted computing base 5 (preferably, on a secure hardware element, such as in a PCR register). One of the industrial control applications 111, 112 may, when required, actively transmit a request for issuing a cryptographically secured attestation 31 of a bound measurement result 21 to the attestation unit 3'. In response to such a request, the attestation unit 3' creates a cryptographically secured attestation 31 of a bound measurement result 21 formed based on the contents of the tuples <m, maID> in the current measurement history, and provides the cryptographically secured attestation 31 back to the requesting industrial control application 111, 112. The requesting industrial control application 111, 112 then uses the network communication API 511 to transmit the obtained cryptographically secured attestation 31, over the communication network 80, to its communication partner, i.e., to the operating or maintenance application 81 executing on the relying party's external device 8.

In this way, advantageously, an industrial control application 111, 112 can use the infrastructure provided by the trusted computing base 5', that is, the measurement binding unit 2 and the attestation unit 3, 3', to obtain a cryptographically secured attestation 31 and use said cryptographically secured attestation 31 as a proof of authenticity versus its communication partner.

It is noted that Fig. 4 shows the trusted computing base 5 comprising the measurement binding unit 2 and the attestation unit 3' as being part of the application runtime environment 50. However, according to a preferred further development, the trusted computing base 5' could be a separate trusted execution environment that is separate from the application runtime environment 50. Such a separate trusted execution environment may be implemented in hardware using an ARM TrustZone, an Intel SGX enclave, or a programmable crypto controller, for example.

That is, in preferred embodiments, at least a measurement history, i.e. the measurement results 61 provided by the measurement agents 11 over time, and an attestation signing key used by the attestation unit 3' to cryptographically secure the attestation 31 are stored in a dedicated hardware-based or hardware-bound secure element. More preferably, also the digital signature protecting the attestation 31 is determined on a dedicated hardware-based or hardware-bound secure element performing the corresponding cryptographic operations.

Furthermore, in the third exemplary embodiment, the verifier component 9 is provided as a component of the external device 8 of the relying party. In particular, the verifier component 9 and the operating or maintenance application 81 are each hosted on the same platform provided by the external device 8. The verifier component 9 and the operating or maintenance application 81 may each be running as a respective app on the external device 8, which may comprise an edge computing system or a cloud infrastructure. For example, the verifier component 9 that is embodied as a verifier app can provide the result of the attestation verification as message on a publish-subscribe communication system (e.g., based on MQTT, XMPP, DiDComm, DDS, OPC UA PubSub, CORBA Event Service, CORBA Notification Service) to other apps, in particular to the operating or maintenance application 81 of the relying party.

In a preferred further development of the third exemplary embodiment, the tuples <m, maID> are being queued in the measurement history based on a predetermined expiry timer that indicates a livespan, that is, as tuples <m, maID, span>. If a tuple's lifespan <span> has expired, the tuple <m, maID, span_expired> is removed from the measurement history. Herein, the tuple may be deleted upon expiry by a unit, such as the measurement binding unit 2' or the attestation unit 3' managing the measurement history, or may be deleted by the attestation unit 3' as soon as a request for providing a cryptographically secured attestation 31 is received. In this way, advantageously, and in contrast to TPM usage by Linux IMA, for example, the list of measurement results 61 / the list of tuples <m, maID, span> does not continuously grow during usage of the industrial computing device 10. The lifespan <span> may or may not be included in the attestation created by the attestation unit 3'.

In yet another preferred further development of the third exemplary embodiment, it would be possible, in addition or alternatively to the attribute <span>, to include a time stamp indicative of the point in time when the measurement 21 has been received or processed by the measurement binding unit 2. The time stamp can be, e.g., a real-time clock stamp, a counter value, or an epoch value. The cryptographically secured attestation 31 may include this time stamp determined by the measurement binding unit 2. Furthermore, it is possible that the measurement 21 provided by the measurement unit 1' comprises a time stamp information determined by the measurement unit 1', indicative of the point time when the measurement 21 has been determined by the measurement unit 1'.

Furthermore, in a preferred further development, an industrial control application 111, 211 can request a cryptographically secured attestation 31 that confirms only a subset of the tuples <m, maID, span> from the current measurement history.

For example, the selected subset may relate to measurements 61 from multiple measurement agents 11, 12, and from measurement agents 11, 12 being part of multiple, different industrial control applications 111, 211 originating from different app developers.

Furthermore, the cryptographically secured attestation 31 may include a timestamp or counter or nonce related to the point in time when the attestation 31 is built, and may include timestamps or a time range indicating when the attested measurements 61 have been determined. As such, a relying party my determine whether a cryptographically secured attestation 31 is still trustworthy based on its age or the like.

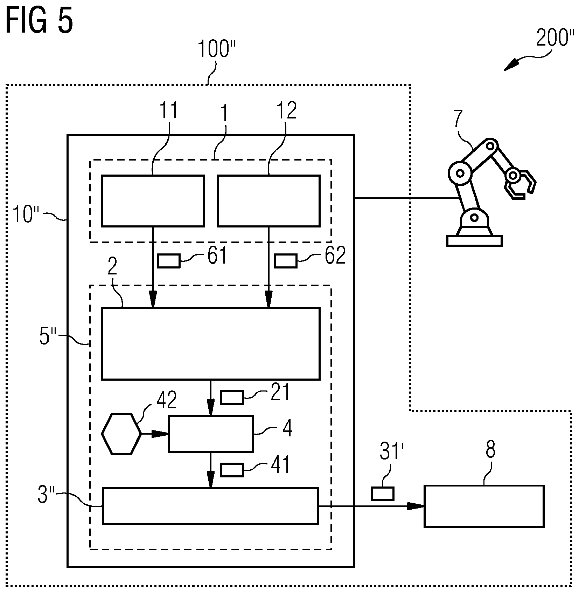

Fig. 5 shows an industrial system 200" according to a fourth exemplary embodiment. The fourth exemplary embodiment is a modification of the second exemplary embodiment. The description will focus on the differences.

The industrial control device 10" of the industrial computing system 100" of the industrial system 200" according to the fourth exemplary embodiment differs from the industrial control device 10 of the first and second exemplary embodiment in that the trusted computing base 5" additionally comprises a policy validation unit 4. The policy validation unit receives the bound measurement result 21 from the measurement binding unit 2 and then performs a validation of the bound measurement result 21 based on the validation policy 42. Herein, the validation policy 42 is stored in an area of the trusted computing base 5 that the OEM is allows to modify using specific commands. More particularly, the validation policy 42 can be uploaded, edited, changed and deleted by the OEM. In this way, the OEM can upload specific validation policy rules that describe the OEM-specific requirements to be imposed on the measurement results 62 and the identifying information of the measurement agents 11, 12. After having performed the validation, the policy validation unit 4 then performs one or more of the following to obtain a pre-validated bound measurement result 41 based on the bound measurement result 21: Preferably, the policy validation unit 4 binds at least a validation result to the bound measurement result 21. The policy validation unit 4 may also bind the validation policy 42 (a copy thereof) to the bound measurement result 21. It is noted that the validation result may be bound to the bound measurement result 21 explicitly (as a value indication "OK", "failure", or further information), or implicitly, i.e. a validation policy 42 bound to the bound measurement result 21 can also be considered to be a positive validation result. Furthermore, the policy validation unit 4 may optionally also preprocess the bound measurement result 21, excising and/or modifying information that was used to determine the validation result therefrom. This kind of processing may also be determined by the validation policy 42. As such, the pre-validated bound measurement result 41 obtained in this way allows to deduce whether the validation succeeded, and optionally allows to determine the policy according to which the validation was performed, but may or may not allow to determine the actual measurement results 61, 62 and/or identities of the measurement agents 11, 12.

Furthermore, it is noted that the rules of the validation policy 42 may not only comprise rules to analyze the most recent measurement results 61, 62 provided by the measurement agents 11, 12. The validation policy 42 may also be allowed to comprise rules that correlate a temporal sequence of different measurements results 61, 62 obtained by a same measurement agent 11, 12 with each other. To this end, measurement results 61, 62 may be enqueued in a measurement history, as it was discussed for the third exemplary embodiment.

Correspondingly, according to the fourth exemplary embodiment, the attestation unit 3" performs an attestation not of the bound measurement result 21, but rather based on the pre-validated bound measurement result 41, and outputs a cryptographically secured attestation 31' to the external device 8, the cryptographically secured attestation 31' being based on the pre-validated bound measurement result 41.

According to the fourth exemplary embodiment, the load of validating the bound measurement result 21 and the cryptographically secured attestation 31 is diverted from the relying party's side (external device 8) to the side of the industrial computing device 10. At the same time, thanks to allowing the uploading of a custom validation policy 42 for use by the policy validation unit 4, the desirable flexibility for the OEM to design arbitrary measurement agents 11, 12, which may require custom semantics for successful validation, is advantageously retained.

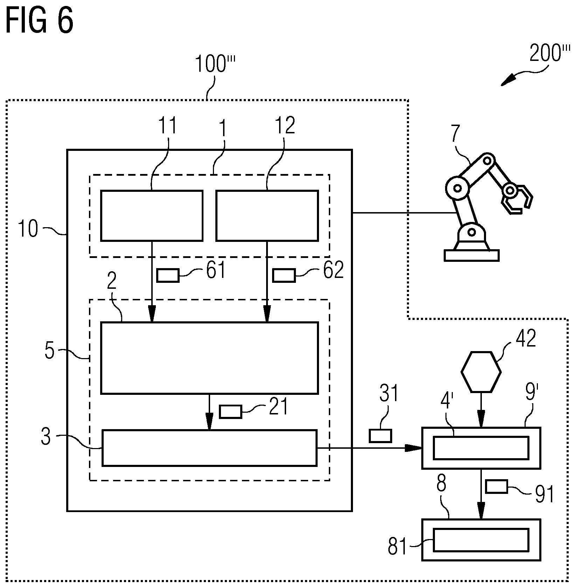

Fig. 6 shows an industrial system 200‴ according to a fifth exemplary embodiment. The fifth exemplary embodiment is a combination of features from the second and fourth exemplary embodiments.

The industrial system 200‴ comprises the technical system 7 and the industrial computing system 100", the latter comprising, in particular, the industrial computing device 10. Herein, the industrial computing device 10 of the fifth exemplary embodiment is the industrial computing device 10 of the second exemplary embodiment or any of its further preferred developments. I particular, the industrial computing device 10 does not comprise a policy validation unit (4 in Fig. 5). The cryptographically secured attestation 31 is based on the (unmodified) bound measurement result 21 and is transmitted to the relying party's external device 8.

Instead, the functionality described for the policy validation unit (4 in Fig. 5) of the fourth exemplary embodiment is provided separate from the industrial computing device 10 in a separate policy validation unit 4' that is part of the separate verifier component 9'.

The verifier component 9' obtains the cryptographically secured attestation 31 and obtains the bound measurement result 21 comprised therein or cryptographically linked to thereby, and performs a validation of the bound measurement result 21 based on validation policy 42. The validation is performed in a manner similar to the manner described for the internal validation unit 4 of the fourth exemplary embodiment. The verifier component 9' also performs any further of the checking steps that were mentioned for the first and/or second exemplary embodiment. Then, the verifier component 9' provides a verification result 91 to the operating or maintenance application 81.

If the validation fails or any of the further checking steps fails, the verification result 91 indicates a failed validation. If the validation succeeds and all of the further checking steps succeed, the verification results 91 indicates successful verification.

As was described for preferred developments of the second exemplary embodiment, the verifier component 9' may be centrally provided on a server or in a cloud service, or may be provided as a component of the external device 8.

Although the present invention has been described in accordance with preferred embodiments, it is obvious for the person skilled in the art that modifications are possible in all embodiments.

In particular, the concepts described for the fourth and fifth exemplary embodiment as further developments of the first and second exemplary embodiment may also be applied to the app-enabled industrial computing system 100' of the third exemplary embodiment.

Aspects, in particular the preferred further developments, of any embodiment may be combined with any other embodiment to form yet another embodiment. In particular, any aspects of the fourth and fifth embodiments, which were described in connection with industrial control device 10 of the first or second exemplary embodiment, may also be combined with the app-enabled industrial computing device 10' of the third exemplary embodiment.

A plurality of industrial control application 111, 211 are shown for the third exemplary embodiment in Fig. 4, and a plurality of measurement agents 11, 12 are shown for the first and second exemplary embodiment in Figs. 1 and 3. However, of course it is conceivable to have only a singular measurement agent 11 and/or only a singular industrial control application 111.

In the second exemplary embodiment, the verifier component 9 is provided centrally and can be used by any number of external devices 8. Alternatively, a respective verifier component 9 may be provided as part of each individual external device 8. Conversely, the third exemplary embodiment shows the verifier component 9 as being part of the external device 8, but also in the third exemplary embodiment, the verifier component 9 could be a central verifier component separate from the external device 8. Also, the external device 8 of any of the exemplary embodiment may also comprise a plurality of computing devices 8. At least some of the computing devices 8 may be server computing devices and/or may participate in forming a cloud service.

## Claims

1. An industrial computing device (10) for controlling a technical system (7), comprising:
a measurement unit (1) for installing therein a number of measurement agents (11, 12), each measurement agent (11, 12) configured to obtain a respective measurement result (61, 62) by performing a measurement of a device attribute of a component of the industrial computing device (10) and/or the technical system (7) controlled thereby;
a measurement binding unit (2) configured to receive the measurement result (61) from each of the number of measurement agents (11, 12) and to generate a bound measurement result (21) by binding the measurement result (61) of each measurement agent (11, 12) to the respective measurement agent (11, 12); and
an attestation unit (3) configured to provide a cryptographically secured attestation (31) of the bound measurement result (21),
wherein the measurement binding unit (2) and the attestation unit (3) are part of a trusted computing base (5) of the industrial computing device (10), whereas the measurement unit (1) is formed outside of the trusted computing base (5) of the industrial computing device (10).

2. The industrial computing device of claim 1,
further comprising the number of measurement agents (11, 12) installed in the measurement unit (1).

3. The industrial computing device of claim 1 or 2,
wherein the measurement binding unit (2) is configured to obtain identifying information of each measurement agent (11, 12) and to bind the respective measurement result (61, 62) to the respective measurement agent (11, 12) by associating the measurement result (61,62) with the obtained identifying information of the measurement agent (11, 12).

4. The industrial computing device of claim 3,
wherein the identifying information of the respective measurement agent (11, 12) comprises one or more of a cryptographic hash value of code of the measurement agent (11, 12), a digital signature of code of the measurement agent (11, 12), a cryptographic hash value of data of the measurement agent (11, 12), a digital signature of data of the measurement agent (11, 12), a cryptographic digital signature of the measurement result (11, 12) made by the measurement agent (11, 12), a public key corresponding to a cryptographic digital signature of the measurement result made by the measurement agent (11, 12), and a digital certificate corresponding to a cryptographic digital signature of the measurement result made by the measurement agent (11, 12).

5. The industrial computing device of any one of claims 1 to 4,
wherein the cryptographically secured attestation (31) comprises or cryptographically links to the bound measurement result (21).

6. The industrial computing device (10") of any of claims 1 to 5,
wherein the trusted computing base (5') further comprises a policy validation unit (4) configured to perform a validation of the bound measurement result (21) based on a validation policy (42) and to bind a validation result, and preferably the validation policy (42), to the bound measurement result (21).

7. The industrial computing device of any one of claim 1 to 6,
wherein the cryptographically secured attestation (31) further comprises a freshness value.

8. The industrial computing device of any one of claims 1 to 7,
wherein at least a portion of the trusted computing base (5) is embodied on a dedicated hardware-based or hardware-bound secure element of the industrial computing device (10).

9. The industrial computing device of any one of claims 1 to 8,
wherein the attestation unit (3) is configured to transmit the cryptographically secured attestation to an external device (8).

10. The industrial computing device of any one of claims 1 to 8,
wherein the industrial computing device (10') is an app-enabled industrial edge device comprising an application runtime environment (50),
each measurement agent (11, 12) is comprised in a respective application (111, 211) executing in the application runtime environment (50), and
the attestation unit (3) is configured to, on request by an application (111, 211) executing in the application runtime environment (50), provide the cryptographically secured attestation (31) to the application (111, 211) executing in the application runtime environment (50).

11. An industrial computing system (100) comprising:
the industrial computing device (10) of any one of the preceding claims;
a verifier component (9) configured to obtain the cryptographically secured attestation (31) from the industrial computing device (10), to verify the cryptographically secured attestation (31), and to provide a verification result (91); and
an operating or maintenance application (81) configured to operate or perform maintenance on the technical system (7) controlled by the industrial computing device (10) by communicating with the industrial computing device (10),
wherein the operating or maintenance application (81) is configured to operate or perform maintenance on the technical system (7) in a regular manner only if the verification result (91) indicates a successful verification.

12. The industrial computing system (100‴) of claim 11,
wherein the verifier component (9') comprises a policy validation unit (4') configured to perform a validation of the bound measurement result (21) comprised in or cryptographically linked to by the cryptographically secured attestation (31) based on a validation policy (42) and is configured to provide the verification result (91) based on a result of the policy-based validation performed by the policy validation unit (4').

13. The industrial computing system of claim 11 or 12,
wherein the verifier component (9), the operating or maintenance application (81) and, optionally, the policy validation unit (4'), are comprised in one or more computing devices that are physically separate from the industrial computing device (10).

14. A method for performing attestation, the method performed by an industrial computing device (10) for controlling a technical system (7), the method comprising:
each of a number of measurement agents (11, 12) obtaining (S1) a measurement result (61, 62) by performing a measurement of a device attribute of a component of the computing device (10) and/or the technical system (7) controlled thereby;
generating (S2) a bound measurement result (21) by binding the measurement result (61, 62) from each measurement agent (11, 12) to the respective measurement agent (61, 62); and
providing (S3) a cryptographically secured attestation (31) of the bound measurement result (21),
wherein the step (S2) of generating the bound measurement result (21) and the step (S3) of providing the cryptographically secured attestation (31) are performed in a trusted computing base (5) of the industrial computing device (10), whereas the step (S1) of obtaining the respective measurement result (61, 62) is executed outside of the trusted computing base (5) of the industrial computing device (10).

15. A computer program product comprising a program code for executing the method of claim 14 when run on at least one computer (10).
